# EUROPÄISCHE PATENTSCHRIFT

(11) **EP 1 901 833 B1**
(45) Veröffentlichungstag und Bekanntmachung des Hinweises auf die Patenterteilung: **22.10.2014**
(21) Anmeldenummer: 06776107.2
(22) Anmeldetag: 30.06.2006
(51) Int. Cl.: F01N 3/08, F01N 3/28, F01N 13/02, F01N 3/021, B01D 53/94, F01N 3/20

(54) **VERFAHREN ZUR REDUZIERUNG DES PARTIKEL- UND STICKOXIDANTEILS IM ABGASSTROM EINER VERBRENNUNGSKRAFTMASCHINE UND ENTSPRECHENDE ABGASAUFBEREITUNGSEINHEIT**
METHOD FOR REDUCING THE PARTICULATE AND NITROGEN OXIDE PORTION IN THE FLOW OF EXHAUST GAS OF AN INTERNAL COMBUSTION ENGINE AND A CORRESPONDING EXHAUST GAS TREATMENT UNIT
PROCEDE DE REDUCTION DE LA TENEUR EN PARTICULES ET EN OXYDES D'AZOTE D'UN FLUX DE GAZ D'ECHAPPEMENT D'UN MOTEUR A COMBUSTION INTERNE ET UNITE DE TRAITEMENT DE GAZ D'ECHAPPEMENT CORRESPONDANTE

(30) Priorität: 06.07.2005 DE 102005031816
(43) Veröffentlichungstag der Anmeldung: 26.03.2008
(73) Patentinhaber: Emitec Gesellschaft für Emissionstechnologie mbH, 53797 Lohmar (DE)
(72) Erfinder: JACOB, Eberhard, 82152 Krailling (DE)
(74) Vertreter: Rössler, Matthias
(86) Internationale Anmeldenummer: PCT/EP2006/006397
(87) Internationale Veröffentlichungsnummer: WO 2007/003380

(56) Entgegenhaltungen:
- EP-A- 1 617 051
- EP-A2- 1 338 770
- WO-A-00/74823
- WO-A-01/92692
- WO-A-2004/111401
- DE-A1- 10 128 414
- US-A1- 2003 180 195
- CHANDLER G ET AL: "EINFLUSSFAKTOREN AUF DAS ANSPRECHVERHALTEN LEICHTER DIESEL OXIDATIONSKATALYSATOREN FACTORS AFFECTING THE LIGHT-OFF PERFORMANCE OF LIGHT-DUTTY DIESEL OXIDATIONS CATALYSTS" AACHENER KOLLOQUIUM FAHRZEUG- UND MOTORENTECHNIK, 2000, Seiten 1063-1078, XP001015125

## Beschreibung

Gegenstand der vorliegenden Erfindung ist ein Verfahren zur Reduzierung des Partikel- und Stickoxidanteils in einem Abgasstrom einer Verbrennungskraftmaschine, sowie eine entsprechende Abgasaufbereitungseinheit. Das erfindungsgemäße Verfahren und die erfindungsgemäße Abgasaufbereitungseinheit können bevorzugt im Abgassystem eines Automobils eingesetzt werden.

In Verbrennungskraftmaschinen werden Kraftstoffe oxidativ umgesetzt. Insbesondere werden hier Kohlenwasserstoffhaltige Kraftstoffe zu entsprechenden Verbrennungsprodukten umgesetzt. Hierbei entstehen eine Vielzahl von Abgaskomponenten, die teilweise unerwünscht sind. Weltweit gibt es in vielen Ländern Vorschriften, die den zulässigen Ausstoß von unerwünschten Abgaskomponenten limitieren. Insbesondere bei Dieselmotoren entstehen Partikel- und Stickoxidkonzentrationen im Abgas, die in vielen Ländern zur Einhaltung von Grenzwerten reduziert werden müssen.

Die im Abgas einer Verbrennungskraftmaschine enthaltenen Partikel enthalten regelmäßig Kohlenstoff. Diese Partikel werden üblicherweise in Partikelfiltern aufgefangen. Es gibt einerseits geschlossene Partikelfiltersysteme wie beispielsweise keramische Extrudate, die wechselweise verschlossene Kanäle aufweisen, so dass Abgas beim Durchströmen des Partikelfilters eine zwischen zwei Kanälen liegende poröse Wand durchströmen muss, wobei in dieser Wand die Partikel zumindest zum Teil festgehalten werden, und offene Partikelfiltersysteme.

Offene Filtersysteme werden beispielsweise in der WO 01/092692 A2 oder der WO 02/00326 A2 beschrieben. Es handelt sich hierbei um Systeme, für ein Abgas durchströmbare Kanäle umfassen, deren Wände zumindest teilweise aus beispielsweise einer zumindest teilweise für ein Fluid durchströmbaren Komponente wie beispielsweise eine Faserlage oder ein entsprechendes poröses Sintermetall-Bauteil gebildet werden. Bevorzugt sind weitere Bauteile ausgebildet, beispielsweise in einem Teil der die Kanäle begrenzenden Wände, die eine Abgasströmung hin zu den porösen Kanalwänden hinlenken. Hierbei erfolgt eine Abscheidung zumindest eines Teils der Partikel an den porösen Wänden durch Druckunterschiede, die den Abgasstrom zumindest zum Teil durch die poröse Wand leiten.

Die offenen Systeme werden als offen bezeichnet, weil im Gegensatz zu geschlossenen Systemen der den Partikelfilter durchströmende Abgasstrom keine Wand durchströmen muss, sondern diese durchströmen kann. Das heißt, für den Fall, dass sämtliche Poren der Wände zwischen zwei Kanälen bereits durch Partikel blockiert sind, kann im geschlossenen Filter dieser Kanal nicht mehr durchströmt werden. Im offenen Filter ist jedoch in einer solchen Situation ein Durchströmen des Kanals möglich.

Stickoxide werden regelmäßig mittels einer selektiven katalytischen Reduktion zu molekularem Stickstoff umgesetzt. Eine solche selektive katalytische Reduktion verlangt regelmäßig den Einsatz eines Reduktionsmittels, welches selektiv auf Stickoxide reagiert. Ein solches Reduktionsmittel stellt beispielsweise Ammoniak (NH₃) dar.

Die benötigten Reduktionsmittel können beispielsweise aus einem Reduktionsmittelvorläufer im Abgassystem hergestellt werden, wobei der Reduktionsmittelvorläufer einen Stoff darstellt, welcher in ein Reduktionsmittel umgewandelt und/oder aus welchem das Reduktionsmittel abgespalten werden kann. Bevorzugte Abspaltungsmöglichkeiten umfassen eine Thermo-, Pyro- und/oder Hydrolyse des Reduktionsmittelvorläufers, die jeweils katalytisch unterstützt werden kann. Ein möglicher Reduktionsmittelvorläufer des Reduktionsmittels Ammoniak umfasst beispielsweise Harnstoff ((NH₂)₂CO). Weitere mögliche Reduktionsmittelvorläufer des Reduktionsmittels Ammoniak sind Cyanursäure oder Isocyansäure, sowie Ammoniumcarbamat.

Der Reduktionsmittelvorläufer muss vor Durchführen der selektiven katalytischen Reduktion so behandelt werden, dass das Reduktionsmittel entsteht oder freigesetzt wird. Beispielsweise kann der Reduktionsmittelvorläufer hierzu hydrolysiert oder thermolysiert werden. Das so entstehende Reduktionsmittel wird dann mit dem Abgasstrom durchmischt und führt bei Durchströmen eines entsprechend ausgestalteten SCR-Katalysators (SCR, Selective Catalytic Reduktion, selektive katalytische Reduktion) zu einer Umsetzung des Stickoxids zu molekularem Stickstoff und Wasser.

Aus R. Allansson, P.G. Blakeman, G.R. Chandler, C.A. Maloney, A.P. Walker, J.P. Warren, J.E. Thoss, "Einsatz von selbstregenerierenden Partikelfiltersystemen (CRT) sowie SCRT zur Einhaltung künftiger Emissionsgrenzen", 21. Internationales Wiener Motorensymposium, H.P. Lenz (Hrsg.) VDI-Fortschritt-Berichte, Reihe 12, Nr.420, Band 2, S.343-355, 2000, ist ein System bekannt, welches aus einem Partikelfilter und einem SCR-Katalysator besteht. Der Partikelfilter ist stromaufwärts des SCR-Katalysators ausgebildet, eine Harnstofflösung wird zwischen Partikelfilter und SCR-Katalysator in das System injiziert. Bei dem Partikelfilter handelt es sich um einen keramischen Partikelfilter mit wechselweise geschlossenen Kanälen. Dieses System weist im Betrieb durch den nachgeschalteten SCR-Katalysator einen erhöhten Abgasgegendruck auf.

Aus der WO 00/42302 A1 wiederum ist ein System bekannt, bei welchem ein Partikelfilter eine Speicherbeschichtung aufweist, die auch Stickoxide einlagern kann. Dieser Partikelfilter kann durch Ammoniak als Reduktionsmittel durchströmt werden. Allerdings erfolgt hier keine selektive katalytische Reduktion, so dass die Umsetzung der Stickoxide verbessert werden kann.

Übliche Systeme aus offenem Partikelfilter, sich daran anschließender Reduktionsmittelzugabe und einem SCR-Katalysator weisen zwar bessere Werte des Abgasgegendrucks auf, diese Systeme können jedoch in Bezug auf ihre Partikelumsetzung weiter verbessert werden.

Die DE-A1-101 28 414 offenbart eine Abgasreinigungsanlage zur Reinigung der Abgase von vorzugsweise mager betriebenen Verbrennungskraftmaschinen, die in Strömungsrichtung hintereinander einen Partikelfilter und einen SCR-Katalysator aufweist. In Strömungsrichtung zwischen dem Partikelfilter und dem SCR-Katalysator ist eine Reduktionsmittelversorgung angeordnet, mit der dem Abgas Ammoniak zugegeben werden kann. Gemäß einer in der DE-A1-101 28 414 beschriebenen Ausführungsform umfasst die Reduktionsmittelversorgung eine Ammoniak-Erzeugungseinheit. Der Ammoniak-Erzeugungseinheit wird ein aus der Abgasleitung der Verbrennungskraftmaschine entnommener Teilstrom des Abgases zugeführt und mit Hilfe eines wasserstoffhaltigen Gases zu Ammoniak umgesetzt.

Diese Aufgabe wird gelöst durch ein Verfahren mit den Merkmalen des Anspruchs 1, sowie eine Abgasaufbereitungseinheit mit den Merkmalen des Anspruchs 7. Vorteilhafte Weiterbildungen sind Gegenstand der jeweiligen abhängigen Ansprüche.

Das erfindungsgemäße Verfahren zur Reduzierung des Partikel- und Stickoxidanteils in einem Abgasstrom einer Verbrennungskraftmaschine umfasst die Schritte, dass
1.1) ein Reduktionsmittel im Abgasstrom bereitgestellt wird,
1.2) der das Reduktionsmittel umfassende Abgasstrom einer Partikelfilterung unterzogen wird und dann
1.3) eine selektive katalytische Reduktion zumindest eines Teils der Stickoxide (NOₓ) im Abgasstrom erfolgt,
wobei das Reduktionsmittel zumindest teilweise on-board aus mindestens einem gasförmigen Edukt erzeugt wird, wobei das Edukt zumindest Abgase der Verbrennungskraftmaschine umfasst und zur Erzeugung des Reduktionsmittels ein Plasmagenerator verwendet wird und das Reduktionsmittel Ammoniak umfasst.

Im Unterschied zu herkömmlichen aus dem Stand der Technik bekannten Systemen wird hier nicht die Reduktion eines Partikelanteils einerseits und die Reduktion des Stickoxidanteils andererseits getrennt betrachtet. Vielmehr werden die beiden Verfahren so kombiniert, dass dann, wenn gemäß 1.2) eine Partikelfilterung erfolgt, der Abgasstrom bereits gemäß 1.1) das Reduktionsmittel enthält. Dies ist insbesondere dann von Vorteil, wenn als Reduktionsmittel für die selektive katalytische Reduktion von Stickoxiden (NOₓ) Ammoniak (NH₃) eingesetzt wird.

Ist die Temperatur während der Partikelfilterung kleiner als etwa 200°C, so erfolgt parallel zur Abscheidung der Partikel eine nichtkatalytische Reaktion von Stickstoffdioxid (NO₂) mit Ammoniak (NH₃) zu Ammoniumnitrat (NH₄NO₃), molekularem Stickstoff (N₂) und Wasser (H₂O):

2 NO₂ + 2 NH₃ → NH₄NO₃ + N₂ +H₂O

Wird das so entstandene Ammoniumnitrat über etwa 200°C erwärmt, so dissoziiert das Ammoniumnitrat zu Ammoniak und Salpetersäure (HNO₃):

NH₄NO₃ ↔ NH₃ + HNO₃

Salpetersäure stellt ein starkes Oxidationsmittel für Kohlenstoff in Russform dar und oxidiert Russ gemäß

4 HNO₃ + 3 C → 4 NO + 3 CO₂ + 2 H₂O

Somit wird das Reduktionsmittel Ammoniak in vorteilhafterweise zur kontinuierlichen Regeneration des Partikelfilters eingesetzt. Hierbei wird der Ammoniakanteil am Abgasstrom nicht verringert, so dass der volle Ammoniakanteil des Abgases zur selektiven katalytischen Reduktion der Stickoxide in Schritt 1.3) in einem entsprechenden SCR-Katalysator zur Verfugung steht. Vielmehr wirkt Ammoniak hier als ein Reaktionsvermittler, der die Disproportionierung von Stickstoffdioxid zu Salpetersäure und Stickstoff fordert. In diesem Zusammenhang kann es vorteilhaft sein, vor der Partikelfilterung 1.2) und gegebenenfalls auch vor Zugabe des Reduktionsmittels 1.1) eine Oxidation von Stickstoffmonoxid (NO) zu Stickstoffdioxid (NO₂) beispielsweise an einem entsprechend ausgebildeten Oxidationskatalysator vorzunehmen. Hierdurch wird in kontinuierlich der relative Anteil von Stickstoffdioxid an den Stickoxiden im Abgas erhöht.

Weiterhin macht sich das erfindungsgemäße Verfahren vorteilhaft zu Nutze, dass bei Temperaturen größer etwa 200°C erstaunlicherweise die Oxidation von Kohlenstoff durch Stickstoffdioxid durch die Anweseneinheit des Reduktionsmittels Ammoniak nicht behindert wird. Vielmehr erfolgt die Umsetzung des Kohlenstoffs und damit die Regeneration des Partikelfilters noch weiter durch Chemisorption von Ammoniak am Kohlenstoff weiter erhöht. Das chemisorbierte Ammoniak erhöht die Reaktivität des Kohlenstoffs gegenüber Oxidationsmitteln.

Von daher gestattet es das erfindungsgemäße Verfahren die Regeneration eines Partikelfilters, an dem die Partikelfilterung 1.2) erfolgt in vorteilhafter Weise zu verbessern. Zusätzliche Regenerationsmöglichkeiten zur Regeneration des entsprechenden Partikelfilters durch Umsetzung der eingelagerten Partikel können erfindungsgemäß vorgesehen sein. Hierzu zählt insbesondere die Bereitstellung von Mitteln, die eine zumindest kurzzeitige Erwärmung des Partikelfilters über eine Temperatur ermöglichen, ab der eine Reaktion des Kohlenstoffs beispielsweise mit Restsauerstoff erfolgt.

Das erfindungsgemäße Verfahren ermöglicht also eine verbesserte Partikelumsetzungsrate bei gleichzeitiger Reduktion des Stickoxidanteils am Abgas.

Insbesondere erfolgt im Rahmen des Verfahrensschrittes 1.2) auch eine Durchmischung des Abgases mit dem Reduktionsmittel, wodurch eine Strähnenbildung des Reduktionsmittels - die die Konvertierung des NOₓ bei der nachfolgenden selektiven katalytischen Reduktion vermindert- ganz oder teilweise aufgelöst wird. Eine besondere verfahrenstechnische Schwierigkeit bei der Ausführung von selektiver katalytischer Reduktion des NOₓ mit (stickstoffhaltigen) Reduktionsmitteln ist die Erfordernis einer homogenen Verteilung des Reduktionsmittels im Abgasstrom vor SCR-Katalysator. Eine entsprechend erfindungsgemäß herstellbare möglichst homogene Verteilung des Reduktionsmittels ermöglicht in vorteilhafter Weise eine möglichst homogene Umsetzung der Stickoxide und erhöht somit die Umsetzungsrate der Stickoxide im Vergleich zu herkömmlichen Systemen.

Gemäß einer vorteilhaften Ausbildung des erfindungsgemäßen Verfahrens wird die Partikelfilterung 1.2) in einem Partikelfilter vorgenommen.

Hier kann der Partikelfilter einerseits ein geschlossenes System darstellen, bei dem mindestens ein Strömungskanal mit porösen Wänden vorgesehen ist, wobei der Strömungskanal so gestaltet ist, dass dieser nicht durchgängig von Abgas durchströmt werden kann, sondern dass vielmehr das Abgas gänzlich durch die Wände des Kanals treten muss. Dies kann beispielsweise bei einem Aufbau mit mehreren Strömungskanälen dadurch erfolgen, dass die Kanäle wechselweise Eingangs- und Ausgangsseitig verschlossen sind. Andererseits kann ein offenes Partikelfiltersystem vorliegen, bei dem mindestens ein durchgängiger Strömungskanal ausgebildet ist. Unter einem durchgängigen Strömungskanal wird im Rahmen dieser Erfindung insbesondere ein Kanal verstanden, der nicht verschlossen ist, durch den also nicht nur Gas durchströmen kann, sondern der grundsätzlich auch von einem festen Partikel durchquert werden kann, welches nicht in oder an einer Wand eines anhaftet. Ein Filter mit mindestens einem solchen durchgängigen Strömungskanal kann als so genannter offener Filter bezeichnet werden. Offene Filter haben den Vorteil, dass es selbst bei einer sehr starken Beladung des Filters mit Partikeln nicht zu einem starken Anstieg des Gegendrucks im Filter kommen kann, dass also der Filter quasi nicht verstopfen kann. Dies hat im Dauerbetrieb entscheidende Vorteile gegenüber einem geschlossenen System. Ein offenes System hat weiterhin den Vorteil, dass der Abgasgegendruck nicht zu stark ansteigt.

Weiterhin bevorzugt ist ein Verfahren, bei dem das den Partikelfilter durchströmende Abgas das Reduktionsmittel umfasst. Bevorzugt kann das Reduktionsmittel die Regeneration des Partikelfilters, das heißt die Reaktion des eingelagerten Kohlenstoffs, befördern. Vorteilhafterweise umfasst das Reduktionsmittel eine Stickstoff- und Wasserstoffhaltige Verbindung.

Insbesondere ist der Partikelfilter so ausgebildet, dass eine möglichst gute Durchmischung des Abgases mit dem Reduktionsmittel erfolgt, insbesondere durch einen Aufbau des Partikelfilters, welcher eine Querströmung des Abgases von einem Kanal in mindestens einen benachbarten Kanal erlaubt. Dies kann beispielsweise durch die Ausbildung von Durchbrechungen in den Kanalwänden ermöglicht werden.

Das Reduktionsmittel wird zumindest teilweise On-Board aus mindestens einem gasformigen Edukt erzeugt.

Das heißt, das Reduktionsmittel wird nicht aus zusätzlichen an Bord eines Kraftfahrzeugs mitgeführten Vorräten, beispielsweise eines Reduktionsmittelvorläufers, sondern vielmehr aus gasförmigen Edukten erzeugt wird. Unter einem gasförmigen Edukt wird insbesondere auch Luft und/oder Abgas in beliebigen Mischungsverhältnissen verstanden. Grundsätzlich ist auch die alternative oder zusätzliche Zugabe von Stickstoff oder Sauerstoff möglich.

Insbesondere kann das Reduktionsmittel oder ein Vorläufer des Reduktionsmittels durch ein thermisches Plasma erzeugt oder dessen Erzeugung unterstützt werden. Insbesondere kann Ammoniak erzeugt werden wie in der DE 102 58 185 A1 beschrieben. Der Offenbarungsgehalt dieser Druckschrift wird im Hinblick auf die Erzeugung von Ammoniak mittels eines Plasmagenerators und eines entsprechenden Reduktionskatalysators in einem Nebenstrom und weiterhin insbesondere im Zusammenhang mit der entsprechenden Ausbildung des Plasmagenerators und dem entsprechenden Betrieb des Plasmagenerators voll inhaltlich in den Offenbarungsgehalt dieser Erfindung mit aufgenommen.

Gemäß einer weiteren vorteilhaften Ausgestaltung des erfindungsgemäßen Verfahrens wird das Reduktionsmittel On-Board zumindest teilweise aus einem Reduktionsmittelvorläufer erzeugt.

Als Reduktionsmittelvorläufer kann insbesondere bevorzugt Harnstoff eingesetzt werden. Der Harnstoff kann hier als Feststoff oder auch in Form einer Harnstoff Wasser-Lösung zugegeben werden. Die Reduktionsmittelbereitstellung 1.1) umfasst in diesem Fall auch eine Pyro-, Thermo- und/oder Hydrolyse des Harnstoffs zu Ammoniak.

Die On-Board Erzeugung aus gasförmigen Edukten und aus mitgeführten nichtgasförmigen Reduktionsmittelvorläufern können bevorzugt auch kombiniert ausgebildet werden. So ist es möglich, die On-Board Erzeugung von Ammoniak aus gasförmigen Edukten zur Abdeckung einer gewissen Grundlast zur Umsetzung von Stickoxiden einzusetzen, während das aus Reduktionsmittelvorläufern erzeugte Reduktionsmittel zur Abdeckung von Spitzen in der Stickoxidkonzentration, die umgesetzt werden müssen, dienen kann. Wird Ammoniak als Reduktionsmittel eingesetzt, so kann der Reduktiönsmittelvorläufer insbesondere in Form von festem Harnstoff oder einer Hamstoff-Wasserlösung mitgeführt werden.

Gemäß einem weiteren Aspekt der Erfindung wird eine Abgasaufbereitungseinheit vorgeschlagen, die eine Durchströmungsrichtung aufweist. Eine erfindungsgemäße Abgasaufbereitungseinheit umfasst
9.1) eine Reduktionsmittelzugabe;
9.2) einen Partikelfilter und
9.3) einen Reduktionskatalysator zur selektiven katalytischen Reduktion von Stickoxiden (NOₓ).

Die Abgasaufbereitungseinheit kann insbesondere das erfindungsgemäße Verfahren umsetzen. Die Reduktionsmittelzugabe 9.1) ist geeignet, einen die Abgasaufbereitungseinheit durchströmenden Gasstrom ein Reduktionsmittel zur Reduktion von Stickoxiden (NOₓ) zuzugeben. Die Komponenten 9.1), 9.2) und 9.3) sind erfindungsgemäß so miteinander verbunden, dass ein Gasstrom die Komponenten 9.1), 9.2) und 9.3) in Durchströmungsrichtung nacheinander durchströmen kann.

Die Reduktionsmittelzugabe weist einen Plasmagenerator auf und ist dazu eingerichtet Reduktionsmittel aus zumindest einem gasförmigen Edukt zu erzeugen, wobei das Edukt zumindest Abgase der Verbrennungskraftmaschine umfasst.

Erfindungsgemäß wird der Partikelfilter 9.2) vom Reduktionsmittel, welches durch oder in der Reduktionsmittelzugabe 9.1) zugegeben werden kann durchströmt Im Betrieb kann es so zu einer vorteilhaften Förderung einer kontinuierlichen Regeneration des Partikelfilters 9.2) durch das Reduktionsmittel kommen. Dies ist insbesondere dann der Fall, wenn als Reduktionsmittel Ammoniak (NH₃) eingesetzt wird. Hier kommt es zu den oben angegebenen Reaktionen. Darüber hinaus kommt es wegen der Chemisorption von Ammoniak am Kohlenstoff zu einer weiterhin deutlich verbesserten Regeneration des Partikelfilters. Insbesondere dann, wenn der Partikelfilter 9.2) und der Reduktionskatalysator 9.3) in einem Bauteil kombiniert werden, wird deutlich weniger Bauraum, insbesondere in Kraftfahrzeugen, benötigt, als wenn jede der zwei Komponenten einzeln ausgeführt wird.

Der Partikelfilter 9.2) kann insbesondere so ausgebildet sein, dass ein ihn durchströmendes Gas durchmischt wird. Im Betrieb kann so ein den Partikelfilter 9.2) durchströmendes Reduktionsmittel umfassendes Abgas möglichst homogenisiert werden, um so eine möglichst gleichmäßige Umsetzung der Stickoxide im Reduktionskatalysator 9.3) zu ermöglichen. Würde statt einem erfindungsgemäßen Verfahren beispielsweise ein mit einer entsprechenden SCR-Beschichtung versehener Partikelfilter vom Reduktionsmittel enthaltenden Abgas durchströmt, so würde das für die Regeneration des Partikelfilters nötige Stickstoffdioxid bereits im Anfangsbereich des Partikelfilters durch die SCR-Beschichtung umgesetzt, so dass dieses Stickstoffdioxid stromabwärts nicht mehr für die Regeneration zur Verfügung stehen würde. Auch deshalb ist das erfindungsgemäße Verfahren von Vorteil.

Gemäß einer vorteilhaften Weiterbildung der erfindungsgemäßen Abgasaufbereitungseinheit umfasst die Reduktionsmittelzugabe 9.1) eine Einbringvorrichtung für einen Reduktionsmittelvorläufer und eine Pyro-, Thermo- und/oder Hydrolyseeinheit.

Als Reduktionsmittelvorläufer können hier bevorzugt Harnstoff, Ammoniumcarbamat, Isocyansäure und/oder Cyanursäure zum Einsatz kommen, besonders bevorzugt ist hierbei der Einsatz von Harnstoff, insbesondere als Festharnstoff oder in Form einer wässrigen Harnstofflösung, möglich.

Als Hydrolyseeinheit kann insbesondere ein entsprechend beschichteter Katalysatorträgerkörper, welcher einer die Hydrolyse des Reduktionsmittelvorläufers fördernde Beschichtung aufweist, verwendet werden. Die Thermo- oder Pyrolyseeinheit kann die entsprechend benötigte Wärme insbesondere aus dem Abgas selbst erhalten, wobei also eine Thermolyse des Reduktionsmittelvorläufers dadurch erfolgt, dass das Abgas den Reduktionsmittelvorläufer auf eine Temperatur oberhalb einer entsprechenden Thermolysetemperatur aufheizt. Weiterhin können alternativ oder zusätzlich weitere Thermolyseeinheiten eingesetzt werden, die beispielsweise auch eine beheizte Struktur wie einen elektrisch beheizbaren Wabenkörper umfassen können.

Gemäß einer weiteren vorteilhaften Ausgestaltung der erfindungsgemäßen Abgasaufbereitungseinheit umfasst die Reduktionsmittelzugabe 9.1) einen Reduktionsmittelgenerator, der geeignet ist, Reduktionsmittel aus mindestens einem gasförmigen Edukt in der Abgasaufbereitungseinheit zu erzeugen.

Eine solche On-Board Erzeugung von Reduktionsmittel wie insbesondere von Ammoniak kann bevorzugt durch ein System mit einem entsprechend ausgestalteten und betreibbaren Plasmagenerator umfassen. In Bezug auf einen entsprechenden Ammoniakgenerator der einen Plasmagenerator umfasst, wird auf die DE 102 58 185 A1 verwiesen, deren Offenbarungsgehalt insbesondere im Zusammenhang mit der Ausbildung und dem Betrieb des Plasmagenerators, der Ausbildung der Elektroden und der Ausbildung im Nebenstrang in den Offenbarungsgehalt dieser Erfindung mit aufgenommen wird.

Insbesondere kann als Reduktionsmittel Ammoniak zum Einsatz kommen.

Besonders bevorzugt ist ein die Ausbildung einer Abgasaufbereitungseinheit, bei der dem Reduktionsmittelkatalysator 9.3) ein Oxidationskatalysator nachgeschaltet ist. Insbesondere kann ein Wabenkörper ausgebildet sein, welcher in einem vorderen Teilbereich eine Reduktionskatalystorbeschichtung zu Beginn des Reduktionskatalysators 9.3) und in einem hinteren Bereich eine Oxidationskatalysatorbeschichtung umfasst. Der nachgeschaltete Oxidationskatalysator dient insbesondere als Sperrkatalysator, welcher gegebenenfalls ein Durchbrechen des Reduktionsmittels, insbesondere Ammoniak, oxidiert und somit wirkungsvoll das Austreten von Ammoniak in die Atmosphäre verhindert.

Bevorzugt ist die Ausbildung einer Abgasaufbereitungseinheit, bei der der Partikelfilter 9.2) und der Reduktionskatalysator 9.3) in einem Bauteil ausgebildet sind. Hierzu kann ein entsprechend ausgebildeter Wabenkörper geformt werden, welcher in seinem stromabwärtigen Bereich mit einer Reduktionskatalysatorbeschichtung versehen ist. Die Integration eines nachgeschalteten Oxidationskatalysators auf demselben Träger ist weiterhin erfindungsgemäß und vorteilhaft möglich.

Gemäß einer weiteren vorteilhaften Ausgestaltung der erfindungsgemäßen Abgasaufbereitungseinheit umfasst der Partikelfilter 9.2) mindestens einen durchgängigen Strömungskanal.

Unter einem durchgängigen Strömungskanal wird hier insbesondere ein Kanal verstanden, der nicht verschlossen ist. Durch einen solchen Kanal kann also nicht nur Gas durchströmen, sondern dieser ist grundsätzlich auch von einem festen Partikel durchquerbar, ohne dass dieses in einer porösen Wand hängen bleibt. Insbesondere ist es möglich, däss ein durchgängiger Strömungskanal von einem Gas durchströmt wird, ohne dass dieses Gas eine der Wandungen des Kanals durchströmen muss. Ein durchgängiger Strömungskanal weist somit einen geometrischen Strömungsquerschnitt auf, der über die gesamte Länge des Strömungskanals nicht null wird. Ein Filter mit mindestens einem solchen durchgängigen Strömungskanal wird insbesondere als offener Filter bezeichnet.

Gemäß einer weiteren vorteilhaften Ausgestaltung einer erfindungsgemäßen Abgasaufbereitungseinheit umfasst der Partikelfilter 9.2) mindestens eine metallische Lage. Besonders bevorzugt ist in diesem Zusammenhang, dass der Partikelfilter 9.2) mindestens eine, zumindest teilweise, poröse metallische Lage und mindestens eine zumindest teilweise als Blechlage ausgebildete Lage umfasst.

Besonders bevorzugt ist hierbei eine Ausgestaltung, bei der ein Wabenkörper aus im Wesentlichen glatten und zumindest teilweise strukturierten Lagen aufgebaut ist. Gemäß einer bevorzugten Ausfuhrungsform werden die im Wesentlichen glatten Lagen zumindest teilweise aus einem für ein Fluid durchströmbaren Material ausgebildet. Insbesondere kann ein erster Bereich dieser Lagen aus einem zumindest teilweise durchströmbaren Material gebildet sein, während ein in Längsrichtung sich darin anschließender zweiter Bereich aus einem nicht für ein Fluid durchströmbaren Material wie beispielsweise einem dünnen Blech gebildet ist. Die zumindest teilweise strukturierten Lagen können beispielsweise gewellte Blechfolien umfassen. Unter einer zumindest teilweise für ein Fluid durchströmbaren Lage oder einem entsprechend zumindest teilweise für ein fluid durchströmbaren Material werden insbesondere Fasermaterialien und hierbei gewebte und nicht gewebte Fasermaterialien, sowie poröse Sintermetallelemente verstanden, die durch Sintern von beispielsweise Partikeln und/oder Fasern hergestellt werden können. So kann ein Wabenkörper hergestellt werden, der in einem ersten Bereich einem Partikelfilter und in einem zweiten Bereich einen SCR-Katalysator umfasst. Hierbei werden bevorzugt die Glattlagen im Filterbereich aus porösem Material gebildet, welches besonders bevorzugt nicht beschichtet ist, während die SCR-Katalysatorbereiche der Glattlagen aus einer entsprechend beschichteten Blechfolie gebildet werden. Gegenüber dem porösem Material der Glattlagen liegend ist im ersten Bereich der Welllagen eine entsprechende Strukturierung vorgesehen, die dazu fahrt, dass ein Abgas, welches diesen Körper durchströmt hin zu den glatten porösen Lagen gelenkt wird. Hier können auch Durchbrechungen und entsprechende Leitstrukturen vorgesehen werden, die eine entsprechende lokale Umlenkung der Strömung bewirken. Im SCR-Katalysator-Bereich der strukturierten Lagen können insbesondere auch Mikrostrukturierungen mit einer Strukturierungsamplitude ausgebildet werden, die kleiner als die grundsätzliche Strukturierungsamplitude der zumindest teilweise strukturierten Lagen ist. Insbesondere können in diesem Bereich auch in beiden Lagenarten, also sowohl in den zumindest teilweise strukturierten Lagen als auch in den im Wesentlichen glatten Lagen Durchbrechungen ausgebildet werden, insbesondere auch Durchbrechungen, deren Abmessungen größer als die Strukturierungswiederholungslängen der zumindest teilweise strukturierten Lagen in diesem Bereich. So bilden sich neben den bereits vorhandenen Kanälen auch so genannten Kavitäten, die Räume darstellen, in die das Abgas aus mehreren Kanälen und aus denen das Abgas in mehrere Kanäle strömen kann. In diesen Kavitäten kommt es in besonders vorteilhafter Weise zur Verwirbelung der Strömung. Es kann eine Querverteilung der Gasströmung erfolgen, weiterhin wird der Kontakt der umzusetzenden Stoffe mit der katalytisch beschichteten Oberfläche verbessert, da eine Durchmischung und Verwirbelung des den Körper durchströmenden Gasstroms erfolgt. Der Teil des Körpers, der als Reduktionskatalysator 9.3) dienen kann, kann ferner als Abschluss eine entsprechende Oxidationskatalysatorbeschichtung als Sperrkat zur Verhinderung des Durchbruchs von Ammoniak umfassen.

Gemäß einer weiteren vorteilhaften Ausgestaltung einer erfindungsgemäßen Abgasaufbereitungseinheit wird der Partikelfilter 9.2) und/oder der Reduktionskatalysator 9.3)
- aus mindestens einer zumindest teilweise strukturierten und gegebenenfalls mindestens einer im Wesentlichen glatten Lage oder
- durch Stapeln mindestens einer zumindest teilweise strukturierten und gegebenenfalls mindestens einer im Wesentlichen glatten Lage und verwinden mindestens eines Stapels
aufgebaut.

Unter einer zumindest teilweise strukturierten Lage versteht man in diesem Zusammenhang eine Lage, die aus einer ebenen Form in eine solche Struktur gebracht worden ist, dass diese Strukturen im Zusammenwirken mit einer im wesentlichen glatten oder einer anderen oder derselben zumindest teilweise strukturierten Lage durchgängige Strukturen, beispielsweise Kanäle eines späteren Trägerkörpers bilden. Insbesondere wird unter einer Strukturierung einer Lage nicht ein Aufwickeln oder Verwinden dieser Lage verstanden. Unter einer zumindest teilweise strukturierten Lage versteht man eine Lage, die zumindest in Teilbereichen eine entsprechende Strukturierung umfasst. Unter einer im Wesentlichen glatten Lage versteht man eine Lage, die eine Strukturierung umfassen kann, wobei diese Strukturierung jedoch im Bezug auf ihre Amplitude deutlich kleiner ist als die Strukturen der zumindest teilweise strukturierten Lage. Solche so genannte Mikrostrukturen können insbesondere nicht in der Erstreckungsrichtung der Kanäle verlaufen, sondern in einem Winkel zu diesen, so dass diese eine bessere Durchmischung eines den Körper durchströmenden Gases befördern und insbesondere auch die Bildung laminarer Randströmungen vermeiden.

Unter einer Lage versteht man hier insbesondere eine metallische Lage, bevorzugt eine Blechfolie, eine Fasermatte, eine poröse Sinterlage und Kombinationen mindestens zweier dieser Elemente. Unter einer Kombination dieser Elemente wird insbesondere auch eine Lage verstanden, die in einem ersten Längsbereich beispielsweise aus einem porösen Material wie beispielsweise einer Faserlage oder einem entsprechendem Sinterwerkstoff und in einem zweiten Längsbereich aus einer Blechfolie besteht, die durch ein fügetechnisches Verfahren, insbesondere ein Widerstandsschweiß- oder Lötverfahren, miteinander verbunden sind. Das Verwinden der Stapel kann gleich- oder gegensinnig erfolgen. Die hier beschriebenen Körper können insbesondere bevorzugt zum Aufbau eines offenen Filters eingesetzt werden.

Gemäß einer weiteren vorteilhaften Ausgestaltung einer erfindungsgemäßen Abgasaufbereitungseinheit ist in Durchströmungsrichtung stromaufwärts des Partikelfilters 9.2) ein zweiter Oxidationskatalysator ausgebildet. Dieser kann insbesondere zur Oxidation von Stickstoffmonoxid (NO) zu Stickstoffdioxid (NO₂) dienen und kann somit die relative Konzentration des Stickstoffdioxids an den Stickoxiden vergrößern. Dieses Stickstoffdioxid kann in vorteilhafter Weise im Rahmen beispielsweise eines CRT-Verfahrens (Continuous Regeneration Trap, kontinuierlich regenerierende Partikelfalle) eingesetzt werden. Hierbei können insbesondere die oben dargelegten Reaktionen ablaufen.

Ein solches System hat den Vorteil, dass nicht wie bei aus dem Stand der Technik bekannten diskontinuierlichen Regenerationsprozessen entweder ein weiteres Reagenz mitgeführt werden muss oder Kraftstoff zur Aufheizung des Partikelfilters eingesetzt werden muss. Somit sinkt im Vergleich zu solchen Systemen der Kraftstoffverbrauch.

Zudem lassen sich als Reduktionsmittelzugabe 9.1) die aus dem Stand der Technik bekannten Verfahren und Vorrichtungen einsetzen, insbesondere eine Zugabe eines Reduktionsmittelvorläufers und dessen anschließend Zersetzung oder Umsetzung zu einem Reduktionsmittel oder aber auch eine On-Board-Generation des Reduktionsmittels, wie beispielsweise oben an Hand eines Plasmagenerators beschrieben. Unter einem Reduktionsmittelvorläufer wird hier insbesondere ein Stoff verstanden, welcher zu Reduktionsmittel reagieren oder welcher Reduktionsmittel abgeben kann. Die Abspaltung des Reduktionsmittels kann beispielsweise thermolytisch oder hydrolytisch erfolgen. Bevorzugt wird Harnstoff als Reduktionsmittelvorläufer eingesetzt, welcher thermo- und/oder hydrolytisch Ammoniak als Reduktionsmittel freisetzen kann. Insbesondere wird Harnstoff in Form von Feststoffpartikeln und/oder in Form einer wässrigen Harnstofflösung zugegeben. In diesem Fall umfasst Schritt 1.1) des erfindungsgemäßen Verfahrens bzw. die entsprechende Reduktionsmittelvorgabe 9.1) Mittel zur Hydrolyse und/oder Thermolyse des Harnstoffs zumindest zum Teil zu Ammoniak. Weitere Reduktionsmittelvorläufer stellen bevorzugt Aminoniumcarbamat, Isocyansäure und Cyanursäure dar.

Die oben im Zusammenhang mit dem erfindungsgemäßen Verfahren offenbarten Details und Vorteile sind auf eine erfindungsgemäße Abgasaufbereitungseinheit anwendbar und übertragbar. Dies gilt auch für in Rahmen der erfindungsgemäßen Abgasaufbereitungseinheit offenbarte Details, die in gleicher Weise auf das erfindungsgemäße Verfahren anwendbar und übertragbar sind.

Im Folgenden soll die Erfindung näher an Hand der beigefügten Zeichnungen beschrieben werden, ohne dass die Erfindung auf die dort dargelegten Ausführungsbeispiele und Vorteile beschränkt wäre. Es zeigen:
- Fig. 1: schematisch ein erstes Ausführungsbeispiel einer erfindungsgemäßen Vorrichtung;
- Fig. 2: schematisch ein Detail eines Partikelfilters;
- Fig. 3: schematisch ein Detail aus einem Partikelfilter;
- Fig. 4: schematisch ein Detail eines Reduktionskatalysators;
- Fig. 5: schematisch ein einen Partikelfilter, einen Reduktionskatalysator und einen Oxidationskatalysator umfassend Bauteil;
- Fig. 6: schematisch ein zweites Ausführungsbeispiel der vorliegenden Erfindung; und
- Fig. 7: schematisch ein Beispiel einer Reduktionsmittelzugabe.

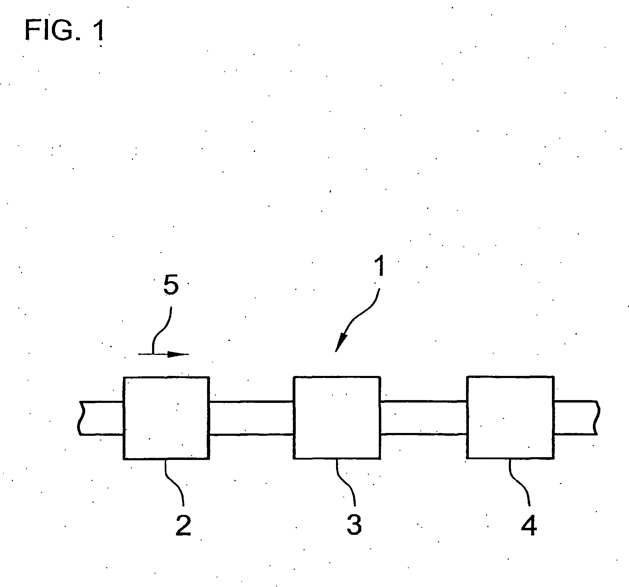

Fig. 1 zeigt schematisch eine Abgasaufbereitungseinheit 1, die eine Reduktionsmittelzugabe 2, einen Partikelfilter 3 und einen Reduktionskatalysator 4 zur Reduktion von Stickoxiden (NOₓ) mittels des SCR-(selective catalytic reduction, selektive katalytische Reduktion) Verfahrens umfasst. Die Abgasaufbereitungseinheit 1 weist eine bevorzugte Durchströmungsrichtung 5 auf. Die Reduktionsmittelzugabe 2, der Partikelfilter 3 und der Reduktionskatalysator 4 sind in Fig. 1 als getrennte Bauteile aufgeführt, diese können jedoch zumindest teilweise auch in einem einzigen Bauteil gemeinsam ausgebildet sein. Dies gilt insbesondere für eine Kombination des Partikelfilters 3 mit dem Reduktionskatalysator 4. Erfindungsgemäß sind die Reduktionsmittelzugabe 2, der Partikelfilter 3 und Reduktionskatalysator so miteinander verbunden, dass ein Gasstrom in Durchströmungsrichtung 5 zunächst durch die Reduktionsmittelzugabe 2, dann durch den Partikelfilter 3 und dann durch den Reduktionskatalysator 4 strömen kann. Insbesondere gewährleistet die erfindungsgemäße Anordnung, dass der Partikelfilter 3 durch Reduktionsmittel enthaltendes Gas durchströmbar ist. Im Betrieb ist die Abgasaufbereitungseinheit 1 so angeordnet, dass das eine Verbrennungskraftmaschine verlassende Abgas zunächst die Reduktionsmittelzugabe 2 durchströmt.

Bei der Reduktionsmittelzugabe 2 kann es sich beispielsweise um ein Mittel handeln, mit welchem ein Reduktionsmittel, bevorzugt Ammoniak (NH₃) im Abgasstrom aus einem Reduktionsmittelvorläufer wie beispielsweise Harnstoff erzeugt wird. Hierzu weist die Reduktionsmittelzugabe 2 entsprechend ausgebildete (nicht gezeigte) Mittel auf, mittels derer einerseits Reduktionsmittelvorläufer zugegeben werden kann und andererseits die Abspaltung oder Erzeugung von Reduktionsmittel aus dem Reduktionsmittelvorläufer gewährleistet werden kann. Beispielsweise kann hier die Zugabe von Harnstoff als Reduktionsmittelvorläufer in fester Form erfolgen, wobei eine Thermo- und/oder Hydrolyse des Harnstoffs an einem entsprechenden Hydrolysekatalysator erfolgen kann. Weiterhin kann der Harnstoff auch in Form einer wässrigen Harnstofflösung direkt auf einen Hydrolysekatalysator erfolgen.

Weiterhin kann auch das Reduktionsmittel, bevorzugt ein Stickstoff- und Wasserstoffhaltiges Reagenz, besonders bevorzugt Ammoniak, aus mindestens einem gasförmigen Edukt direkt in der Abgasaufbereitungseinheit 1 On-Board erzeugt werden. Hierzu kann beispielsweise die Reduktionsmittelzugabe einen Plasmagenerator im Nebenstrom umfassen, mittels welchem ein insbesondere Stickstoffmonoxidhaltiger Gasstrom im Nebenstrom erzeugt wird, wobei die Stickoxide dieses Gasstroms an einem Wabenkörper mit Reduktionsspeicherbeschichtung chemisorbiert und als Nitrite oder Nitrate gespeichert werden. Daraufhin kann mit einem Wasserstofthaltigen Gasstrom eine Reaktion mit diesen Nitriten und Nitraten zu Ammoniak erfolgen.

In Durchströmungsrichtung 5 stromabwärts der Reduktionsmittelzugabe 2 ist ein Partikelfilter 3 ausgebildet. Der Partikelfilter kann insbesondere als offener Partikelfilter 2 ausgebildet sein, welcher mindestens einen durchgängigen Strömungskanal aufweist.

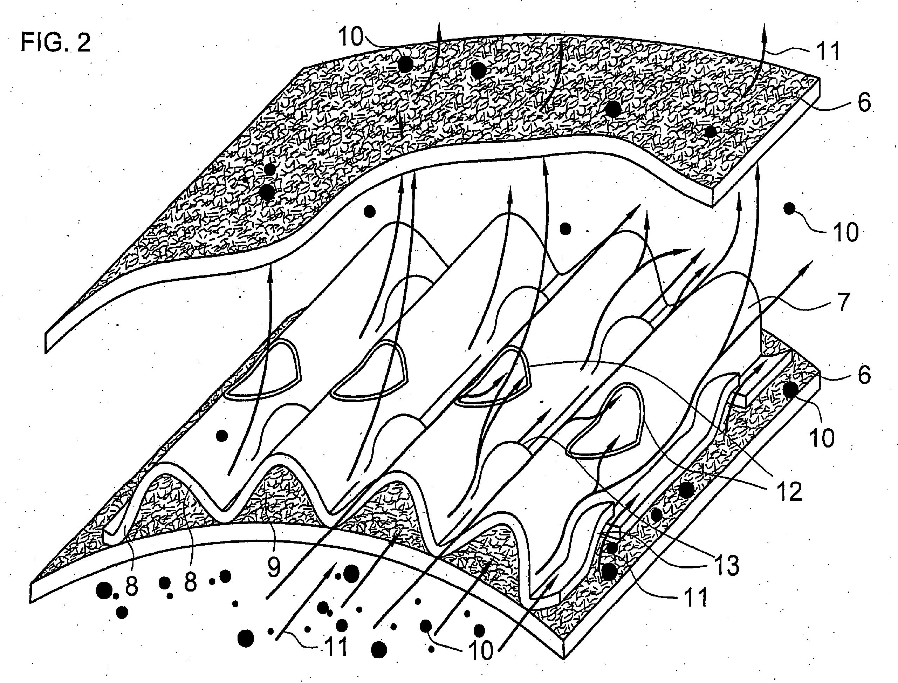

Der Partikelfilter 2 kann insbesondere einen entsprechend ausgebildeten Wabenkörper umfassen. Bevorzugt ist hierbei eine Ausbildung, bei der wie in Fig. 2 gezeigt aus zumindest teilweise für ein Fluid durchströmbaren, im Wesentlichen glatten Lagen 6 und zumindest teilweise strukturierten Lagen 7 aufgebaut ist. Fig. 2 zeigt schematisch einen Ausschnitt aus einem entsprechenden Partikelfilter 3. Der Partikelfilter 3 wird durch Aufwickeln mindestens einer zumindest teilweise für ein Fluid durchströmbaren, im Wesentlichen glatten Lage 6 und wenigstens einer zumindest teilweise strukturierte Lage 7 oder durch Stapeln solcher Lagen 6, 7 und anschließendes Verwinden mindestens eines solchen Stapels. Die Strukturen 8 der zumindest teilweise strukturierten Lage 7 bilden gemeinsam mit der zumindest teilweise für eine Fluid durchströmbaren, im Wesentlichen glatte Lage 6 für ein Fluid durchströmbare Strömungskanäle 9. Diese Strömungskanäle 9 sind durchgängig, dass heißt der Querschnitt dieser Kanäle ist an keiner Stelle des Partikelfilters 3 gänzlich blockiert. Ein mit Partikeln 10 beladener Abgasstrom 11 durchströmt den Partikelfilter 3. Durch Durchbrechungen 12 und Leitschaufeln 13 in der zumindest teilweise strukturierten Lage 7 wird der Abgasstrom 11 hin zu den zumindest teilweise für ein Fluid durchströmbaren, im Wesentlichen glatten Lagen 6 gelenkt. Hier kommt es zu einer Anlagerung zumindest eines Teils der Partikel 10 im zumindest teilweise für Fluid durchströmbaren Material 6. Die Ausbildungen der Durchbrechungen 12 und Leitschaufeln 13 führt zu einem Druckgefälle durch die zumindest teilweise für ein Fluid durchströmbare im Wesentlichen glatte Lage 6, welche den Abgasstrom 11 durch diese Lage hindurch bedingt.

Unter einer zumindest teilweise für ein Fluid durchströmbaren Lage wird eine zumindest teilweise metallische Lage verstanden, die zumindest in Teilbereichen porös ist. Hierbei kann es sich insbesondere um metallische Faserlagen handeln, die verwebt oder nicht verwebt werden oder auch um entsprechend ausgebildete metallische Sinterlagen, bei denen eine Porosität durch eine entsprechende Versinterung von Pulver oder auch von Fasern erreicht wird. Die zumindest teilweise strukturierte Lage 7 kann insbesondere auch aus einer dünnen Blechfolie hergestellt werden.

Die Durchbrechungen 12 und Leitschaufeln 13 erlauben eine Umlenkung des Abgasstroms 11 von einem Strömungskanal 9 in einen benachbarten Strömungskanal 9. Dies führt insbesondere auch zu einer Durchmischung des den Partikelfilter 3 durchströmenden Abgases und somit zu einer möglichst homogenen Verteilung des Reduktionsmittels im Abgas.

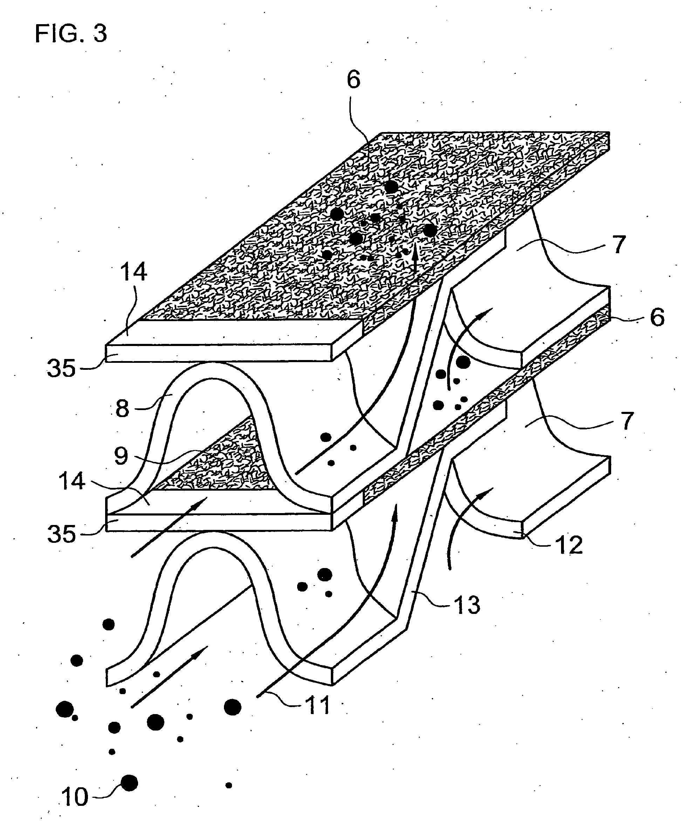

Fig. 3 zeigt schematisch ein weiteres Beispiel eines Partikelfilters 3. Die Abgasströme 11 werden durch die Leitschaufeln 13 und die Durchbrechungen 12 hin zu den zumindest teilweise für ein Fluid durchströmbaren im Wesentlichen glatten Lagen 6 gelenkt. Die Durchbrechungen 12 und Leitschaufeln 13 sind in zumindest teilweise strukturierten Lagen 7 ausgebildet. Diese zumindest teilweise strukturierten Lagen 7 weisen im Wesentlichen wellenförmige Strukturen 8 auf, die mit der im wesentlichen glatten Lage 6 für ein Fluid durchströmbaren Strömungskanäle 9 bildet. Die zumindest teilweise für ein Fluid durchströmbare, im Wesentlichen glatte Lage 6 weist anströmseitig einen Verstärkungsbereich 14 auf, der bevorzugt aus einer Blechfolie gebildet ist, die an der zumindest teilweise für ein Fluid durchströmbare, im Wesentlichen glatten Lage 6 angebracht oder einen entsprechenden Teil der zumindest teilweise für ein Fluid durchströmbaren, im Wesentlichen glatten Lage 6 umfängt. Die Verbindung kann insbesondere durch fügetechnische Verfahren erreicht werden, beispielsweise durch entsprechende Schweiß-, bevorzugt Widerstandsschweißverfahren oder durch Hart-Löt-Verbindungen. Der Verstärkungsbereich 14 kann in vorteilhafter Weise ein auf der Pulsatilität des Abgasstroms 11 beruhendes Ausfransen der Kanten der zumindest teilweise für ein Fluid durchströmbaren im wesentlichen glatten Lagen verhindern. Der Verstärkungsbereich 14 kann in vorteilhafter Weise mit einer katalytisch aktiven Beschichtung versehen sein, insbesondere so dass der Verstärkungsbereich 14 einen zweiten Oxidationskatalysator 35 umfasst, der die Oxidation von Stickstoffmonoxid zu Stickstoffdioxid katalysiert. Stickstoffdioxid stellt ein Oxidationsmittel für Kohlenstoff dar, so dass durch den zweiten Oxidationskatalysator 35, der auch auf einem separaten, stromaufwärts des Partikelfilters 3 liegenden Wabenkörper ausgebildet sein kann, die Regeneration des Partikelfilters 3 durch verstärkte Oxidation des Kohlenstoffs in den Partikeln gefördert wird.

Die Durchbrechungen 12 und Leitschaufeln 13 führen weiterhin insbesondere zu einer möglichst homogenen Verteilung des Reduktionsmittels im den Partikelfilter 3 durchströmenden Abgasstrom 11.

Wie Fig. 1 zu entnehmen ist, ist in Durchströmungsrichtung 5 stromabwärts des Partikelfilters 3 ein Reduktionskatalysator 4 ausgebildet, welcher so aufgebaut und insbesondere beschichtet ist, dass eine selektive katalytische Reduktion von Stickoxiden (NO, NO₂) zu molekularem Stickstoff erfolgen kann. Bei dem Reduktionskatalysator 4 handelt es sich bevorzugt um einen Wabenkörper, welcher für ein Fluid durchströmbare Hohlräume umfasst. Insbesondere kann es sich hierbei um einen keramischen Monolithen handeln, welcher beispielsweise handelsüblich entsprechend extrudiert wird. Weiterhin kann der Wabenkörper aus im Wesentlichen glatten und zumindest teilweise strukturierten metallischen Lagen aufgebaut sein, beispielsweise indem zumindest eine zumindest teilweise strukturierte Lage und wenigstens eine im Wesentlichen glatte metallische Lage gemeinsam aufgewickelt werden oder indem Stapel aus mindestens einer zumindest teilweise strukturierten metallischen Lage und gegebenenfalls mindestens einer im Wesentlichen glatten Lage gestapelt und mindestens einer dieser Stapel zu einem Wabenkörper verwunden werden. Der Reduktionskatalysator 4 umfasst eine Beschichtung, die eine die selektive Reduktion von Stickoxiden katalysierende Wirkung aufweisen. Insbesondere kann eine Titandioxid (Anatas) getragene Vanadium-Wolfram-Mischoxid-Beschichtung vorliegen oder eine metallausgetauschte Zeolithe umfassende Beschichtung. Insbesondere kann es sich hier um Eisenzeolithe handeln. Bevorzugt handelt es sich bei den metallausgetauschten Zeolithen um Zeolithe der Arten X, Y, ZSM-5 oder ZSM-11.

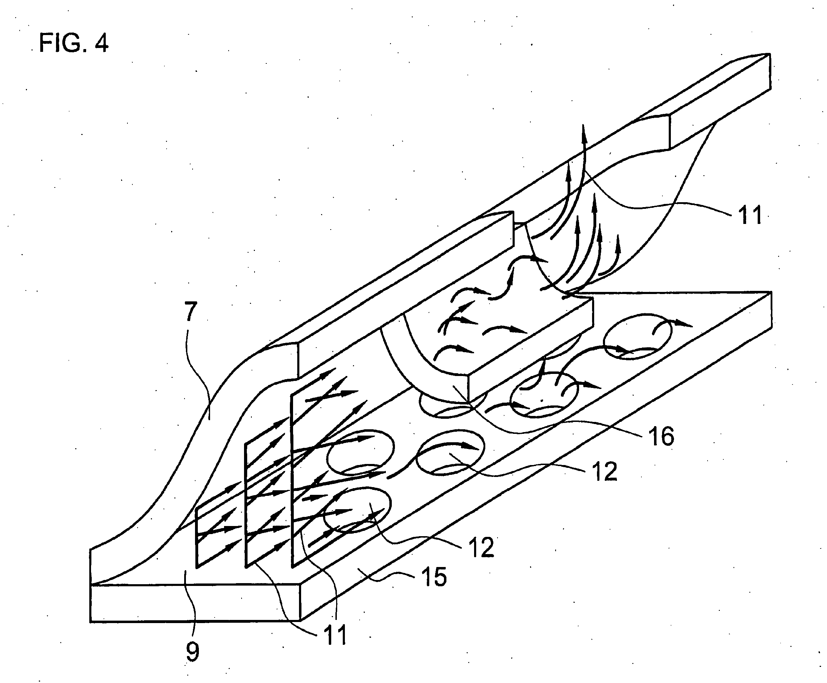

Fig. 4 zeigt ein Beispiel eines möglichen Reduktionskatalysators 4 im Ausschnitt. Der Reduktionskatalysator 4 umfasst einen Wabenkörper, der im Wesentlichen glatte Lagen 15 und zumindest teilweise strukturierten Lagen 7 umfasst. Der Abgasstrom in diesem Strömungskanal 9 ist durch die Pfeile 11 angedeutet. Die im Wesentlichen glatte Lage 15 weist Durchbrechungen 12 auf, die als Ausnehmung in der glatten Lage ohne hervorstehende Bereiche gebildet ist. Diese gelochte, im Wesentlichen glatte Lage 15 liegt gegenüber einer zumindest teilweise shukturierten Lage 7, die Ausklinkungen 16 aufweist. Durch das Zusammenwirken der Durchbrechungen 12 sowie der Ausklinkungen 16 wird eine gute Durchmischung der Abgasströme 11 erreicht, die im Zusammenwirken mit einer hier nicht gezeigten auf den Lagen 7, 15 ausgebildeten Beschichtung zu einer guten Umsetzung der Stickoxide führt. Durch die Durchbrechungen 12 und Ausklinkuhgen 16 kann, es weiterhin zum Austausch von Abgas zwischen benachbarten Kanälen kommen.

Die Fig. 2 bis 4 stellen bevorzugte Ausführungsformen dar, der Partikelfilter 3 und der Reduktionskatalysator 4 können auch anders ausgebildet sein.

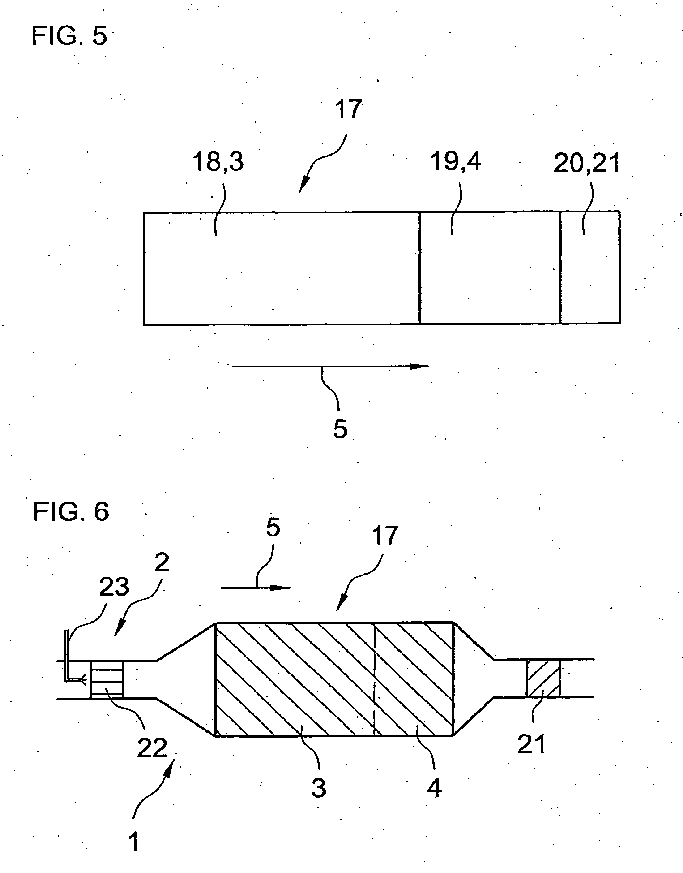

Fig. 5 zeigt schematisch ein Bauteil 17. Dieses Bauteil 17 stellt einen Trägerkörper dar. Das Bauteil 17 ist so ausgebildet, dass es im vorliegenden Ausführungsbeispiel drei Bereiche in Durchströmungsrichtung 5 umfasst. Der in Durchströmungsrichtung 5 erste Bereich 18 umfasst einen Partikelfilter 3. Dieser Partikelfilter 3 ist bevorzugt offen ausgebildet und besonders bevorzugt wie in den Fig. 3 oder 4 im Detail gezeigt. In Durchströmungsrichtung 5 an den ersten Bereich 18 anschließend ist ein zweiter Bereich 19 ausgebildet, der als Reduktionskatalysator 4 dient. Dieser Bereich ist insbesondere so ausgebildet wie in Fig. 4 gezeigt. In Durchströmungsrichtung 5 ist fakultativ an den zweiten Bereich 19 anschließend ein dritter Bereich 20 ausgebildet, welcher einen Oxidationskatalysator 21 umfasst. Das Bauteil 17 ist bevorzugt aus zumindest teilweise strukturierten Lagen 7 und im Wesentlichen glatten Lagen 6, 15 ausgebildet. Insbesondere weisen dann die jeweiligen Lagen 6, 7, 15, den oben gezeigten Beispielen entsprechende Bereiche auf, die nach Bildung des Bauteils 17 den Bereichen 18, 19, 20 entsprechen. So kann beispielsweise eine strukturierte Lage ausgebildet sein, die in dem ersten Bereich 18 entsprechenden Teilbereich Strukturen 8 aufweist, unbeschichtet ist und Durchbrechungen 12 und Leitstrukturen 13 aufweist, während sie in dem zweiten Bereich 19 entsprechenden Teilbereich beschichtet ist und Ausklinkungen 16 aufweist. Entsprechend kann eine im Wesentlichen glatte Lage 6 in einem dem ersten Bereich 18 entsprechenden Bereich aus einem für ein Fluid durchströmbaren Material 6 ausgebildet und unbeschichtet sein, während sie in einem dem zweiten Teilbereich 19 entsprechenden Teilbereich aus einer entsprechenden ausgebildeten Blechfolie, insbesondere mit Durchbrechungen 12 ausgebildet ist. In einem solchen Fall kann die glatte Lage im ersten Bereich 18 unbeschichtet sein, während im zweiten Bereich 19 eine entsprechende Beschichtung ausgebildet ist.

Ein solches Bauteil 17 kann, wie in Fig. 6 gezeigt, vorteilhafterweise mit einer entsprechenden Reduktionsmittelzugabe 2 erfindungsgemäß gemeinsam ausgebildet sein.

Fig. 6 zeigt schematisch eine Abgasbehandlungseinheit 1 umfassend eine Reduktionsmittelzugabe 2. Die Reduktionsmittelzugabe 2 umfasst einen Hydrolysekatalysator 22 und eine Einbringvorrichtung 23, durch die in Durchströmungsrichtung 5 stromaufwärts des Hydrolysekatalysators 22 ein Reduktionsmittelvorläufer zugegeben werden kann. Im Betrieb der Abgasaufbereitungseinheit 1 erfolgt nach Erreichen der Anspring- oder "Light-Off"-Temperatur des Hydrolysekatalysators 22 eine Hydrolyse des Reduktionsmittelvorläufers. Bevorzugt wird als Reduktionsmittelvorläufer Harnstoff eingesetzt. Dieser Harnstoff kann mittels der Einbringvorrichtung 23 in Form einer Harnstoff-Wasser-Lösung oder in Form eines Feststoffes zugegeben werden. Am Hydrolysekatalysator 22 erfolgt dabei eine Thermolyse und/oder Hydrolyse des Harnstoffs. Hierbei wird der Harnstoff ((NH₂)₂CO) mit Wasser (H₂O) zu Ammoniak (NH₃) und Kohlendioxid (CO₂) umgesetzt. Das hierzu nötige Wasser ist regelmäßig im Abgas von Verbrennungskraftmaschinen als Nebenprodukt enthalten. Der den Hydrolysekatalysator 22 verlassende Abgasstrom enthält damit Reduktionsmittel, bevorzugt Ammoniak. Dieser mit Ammoniak oder Reduktionsmittel beladene Abgasstrom durchströmt dann zunächst den Partikelfilter 3, der Teil des Bauteils 17 ist. Hier erfolgt wie oben beschrieben eine verbesserte Umsetzung der Russpartikel mittels des vorhandenen Ammoniaks. Bevorzugt kann stromaufwärts der Reduktionsmittelzugabe 2 ein Oxidationskatalysator ausgebildet sein, mit welchem Stickstoffmonoxid zu Stickstoffdioxid umgesetzt wird. Im Partikelfilter 3 erfolgt eine Anlagerung der im Abgas enthaltenen Kohlenstoff umfassenden Partikel an entsprechenden Filterelementen, bevorzugt wie oben dargelegt an porösen oder hochporösen Wandbereichen von Strömungskanälen 9.

Nach Durchströmen des Partikelfilters 3 durchströmt der nach wie vor Ammoniak enthaltende Abgasstrom den Reduktionskatalysator 4, der ebenfalls ein Bereich des Bauteils 17 ist. Hier erfolgt eine selektive katalytische Reduktion der im Abgas vorhandenen Stickoxide (NOₓ) mit dem Reduktionsmittel zu molekularem Stickstoff und Wasser beispielsweise wie folgt:

NO + NO₂ + 2NH₃ -> 2N₂ + 3H₂O

Im Ausführungsbeispiel gemäß Fig. 6 ist der Oxidationskatalysator 21 nicht Teil des Bauteils 17, sondern diesem nachgeschaltet. Hierzu ist ein separater Oxidationskatalysator 21 ausgebildet.

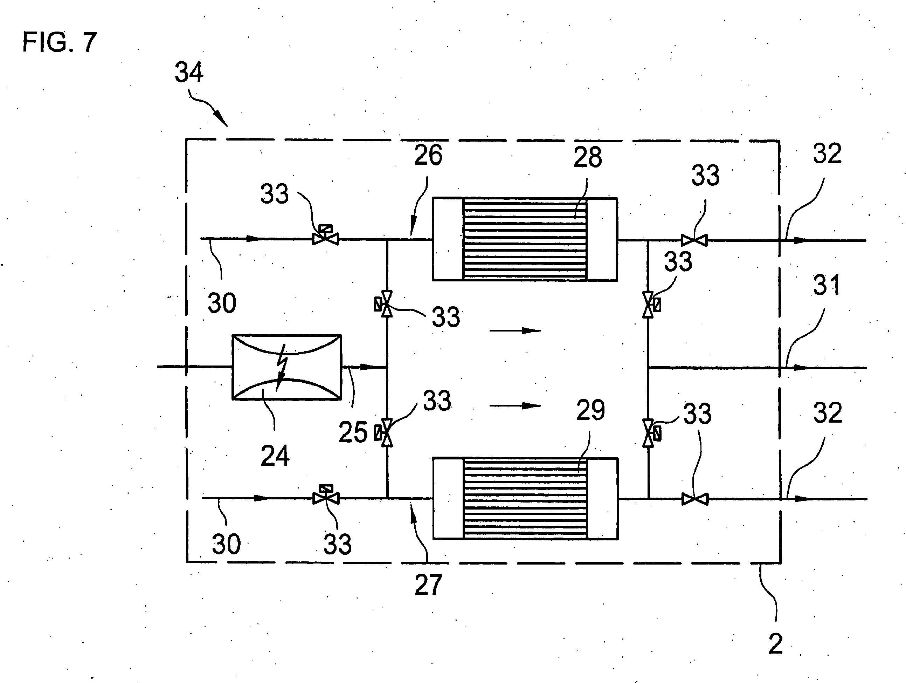

Fig. 7 zeigt schematisch ein weiteres Ausführungsbeispiel einer Reduktionsmittelzugabe 2. Diese Reduktionsmittelzugabe 2 umfasst einen Reduktionsmittelgenerator 34. Der Reduktionsmittelgenerator 34 umfasst einen Plasmagenerator 24. Dieser Plasmagenerator 24 wird mit einem Stickstoff und Sauerstoff enthaltenden Gasstrom als Betriebsgas betrieben. Der Plasmagenerator 24 ist insbesondere so ausgebildet und wird so betrieben, wie in der DE 102 58 185 A1 beschrieben, deren Offenbarungsgehalt im Hinblick auf die Gestaltung des Plasmagenerators und den Betrieb des Plasmagenerators in den Offenbarungsgehalt dieser Erfindung aufgenommen wird.

Den Plasmagenerator 24 verlässt ein Stickstoffmonoxidhaltiger Gasstrom 25. Daran anschließend ist ein erster Gasstrang 26 und ein zweiter Gasstrang 27 ausgebildet. Diese Gasstränge 26, 27 können wechselweise durchströmt werden. Der erste Gasstrang 26 umfasst ein erstes Speicherreduktionselement 28, während der zweite Gasstrang 27 ein zweites Speicherreduktionselement 29 umfasst. Jedes dieser Speicherreduktionselemente 28, 29 ist so ausgebildet, insbesondere mit einer solchen Beschichtung versehen, dass eine Chemisorption von Stickoxiden, bevorzugt von Stickstoffmonoxid, möglich ist. Hierbei erfolgt eine Speicherung in Form von Nitriten und Nitraten. Wird nun ein Speicherreduktionselement 28, 29, welches mit Nitriten und Nitraten beladen ist, von einem Wasserstoffhaltigen Gasstrom durchströmt, so reduziert der Wasserstoff die Nitrite und Nitrate zu Ammoniak. Somit kann ein Ammoniakhaltiger Gasstrom bereitgestellt werden. Zum Zwecke der Bereitstellung eines solchen Ammoniakhaltigen Gasstroms kann ein Wasserstoffhaltiger Gasstrom 30 durch die Speicherreduktionselemente 28, 29 geleitet werden. Ein solcher Wasserstoffhaltiger Gasstrom 30 kann insbesondere ein Spalt- oder Synthesegas umfassen, welches mittels eines Reformers aus Kraftstoff und/oder Kohlenwasserstoffen hergestellt wird. Dies erfolgt insbesondere durch partielle Oxidation.

Im Betrieb der Reduktionsmittelzugabe 2 durchströmt das Stickstoffmonoxidhaltige Gas 25 entweder den ersten 26 oder den zweiten Gasstrang 27. Sofern dieser Stickstoffmonoxidhaltige Gasstrom 25 den ersten Gasstrang 26 durchströmt, erfolgt im ersten Speicherreduktionselement 28 eine Chemiesorption der im Stickstoffmonoxidhaltigen Gasstrom 25 umfassten Stickoxide. Gleichzeitig wird der zweite Gasstrang 27 durch ein Wasserstoffhaltiges Gas 30 durchströmt, so dass die Nitrite und Nitrate in zumindest teilweise gefüllten zweiten Speicherreduktionselement 29 zu Ammoniak reagieren. Somit wird jeweils gleichzeitig ein Ammoniakhaltiger Gasstrom 31 generiert, während gleichzeitig im jeweils anderen Gasstrang ein im Regelfall Sauerstoffhaltiger Abgasstrom 32 erzeugt wird, welcher abgegeben wird.

Der Ammoniakhaltige Gasstrom 31 wird dann erfindungsgemäß dem Partikelfilter 3 und später dem Reduktionskatalysator 4 als Reduktionsmittel zugeführt. Die Abfallgasströme 32 können gegebenenfalls noch über einen Oxidationskatalysator in die Abgasleitung geführt werden. Die Lenkung der jeweiligen Gasströme erfolgt über Ventile 33, die entsprechend gesteuert und/oder geregelt werden.

Das erfindungsgemäße Verfahren und die erfindungsgemäße Abgasbehandlungseinheit ermöglichen in vorteilhafter Weise die gleichzeitige Reduktion des Anteils von Partikeln und Stickoxiden im Abgas. Als Reduktionsmittel wird insbesondere Ammoniak eingesetzt. Durch die Durchleitung eines Ammoniakhaltigen Gasstroms durch den Partikelfilter 3 wird die Regeneration des Partikelfilters 3 in vorteilhafter Weise begünstigt. Das erfindungsgemäße Verfahren und die erfindungsgemäße Vorrichtung erlauben es im Vergleich zu aus dem Stand der Technik bekannten entsprechenden Systemen bei gleicher Umsetzungsrate mit einem geringeren Kraftstoffmehrverbrauch auszukommen und gleichzeitig den zur Verfügung stehenden Bauraum zu reduzieren.

### Bezugszeichenliste

- 1: Abgasaufbereitungseinheit
- 2: Reduktionsmittelzugabe
- 3: Partikelfilter
- 4: Reduktionskatalysator
- 5: Durchströmungsrichtung
- 6: zumindest teilweise für ein Fluid durchströmbare, im Wesentlichen glatte Lage
- 7: zumindest teilweise strukturierte Lage
- 8: Struktur
- 9: Strömungskanal
- 10: Partikel
- 11: Abgasstrom
- 12: Durchbrechung
- 13: Leitstruktur
- 14: Verstärkungsbereich
- 15: im Wesentlichen glatte Lage
- 16: Ausklinkung
- 17: Bauteil
- 18: erster Bereich
- 19: zweiter Bereich
- 20: dritter Bereich
- 21: Oxidationskatalysator
- 22: Hydrolysekatalysator
- 23: Einbringvorrichtung
- 24: Plasmagenerator
- 25: Stickstoffmonoxidhaltiger Gasstrom
- 26: erster Gasstrang
- 27: zweiter Gasstrang
- 28: erstes Speicherreduktionselement
- 29: zweites Speicherreduktionselement
- 30: Wasserstoffhaltiger Gasstrom
- 31: Ammoniakhaltiger Gasstrom
- 32: Abfallgasstrom
- 33: Ventil
- 34: Reduktionsmittelgenerator
- 35: zweiter Oxidationskatalysator

## Patentansprüche

1. Verfahren zur Reduzierung des Partikel- und Stickoxidanteils in einem Abgasstrom einer Verbrennungskraftmaschine, bei dem
1.1) ein Reduktionsmittel im Abgasstrom (11) bereitgestellt wird,
1.2) der das Reduktionsmittel umfassende Abgasstrom (11) einer Partikelfilterung unterzogen wird und dann
1.3) eine selektive katalytische Reduktion zumindest eines Teils der Stickoxide im Abgasstrom (11) erfolgt, wobei
das Reduktionsmittel zumindest teilweise on-board aus mindestens einem gasförmigen Edukt erzeugt wird, wobei das Edukt zumindest Abgase der Verbrennungskraftmaschine umfasst und zur Erzeugung des Reduktionsmittels ein Plasmagenerator verwendet wird und das Reduktionsmittel Ammoniak umfasst.

2. Verfahren nach Anspruch 1, bei dem die Partikelfilterung 1.2) in einem Partikelfilter (3) vorgenommen wird.

3. Verfahren nach einem der vorhergehenden Ansprüche, bei dem das Reduktionsmittel eine Stickstoff- und Wasserstoffhaltige Verbindung umfasst.

4. Verfahren nach Anspruch 1, bei dem als Edukt mindestens eines der folgenden Gase eingesetzt wird:
6.1) Sauerstoff;
6.2) Stickstoff;
6.3) Luft; und
6.4) Abgas.

5. Verfahren nach einem der vorhergehenden Ansprüche, bei dem das Reduktionsmittel on-board zumindest teilweise aus einem Reduktionsmittelvorläufer erzeugt wird.

6. Verfahren nach Anspruch 5, bei dem als Reduktionsmittelvorläufer Harnstoff eingesetzt wird.

7. Abgasaufbereitungseinheit (1), die eine Durchströmungsrichtung (5) aufweist, umfassend
9.1) eine Reduktionsmittelzugabe (2) zur Zugabe eines Ammoniak umfassenden Reduktionsmittels;
9.2) einen Partikelfilter (3); und
9.3) einen Reduktionskatalysator (4) zur selektiven katalytischen Reduktion von Stickoxiden (NOx),
wobei die Reduktionsmittelzugabe (2) geeignet ist, einem die Abgasaufbereitungseinheit (1) durchströmenden Gasstrom ein Reduktionsmittel zur Reduktion von Stickoxiden (NO_{X}) zuzugeben, **dadurch gekennzeichnet, dass** die Komponenten so miteinander verbunden sind, dass ein Gasstrom die Komponenten 9.1), 9.2) und 9.3) in Durchströmungsrichtung (5) nacheinander durchströmen kann, wobei die Reduktionsmittelzugabe einen Plasmagenerator aufweist und dazu eingerichtet ist Reduktionsmittel aus zumindest einem gasförmigen Edukt zu erzeugen, wobei das Edukt zumindest Abgase der Verbrennungskraftmaschine umfasst.

8. Abgasaufbereitungseinheit (1) nach Anspruch 7, bei der die Reduktionsmittelzugabe (2) eine Einbringvorrichtung (23) für einen Reduktionsmittelvorläufer und eine Pyro-, Thermo- und/oder Hydrolyseeinheit (22) umfasst.

9. Abgasaufbereitungseinheit nach Anspruch 7 oder 8, bei der die Reduktionsmittelzugabe (2) einen Reduktionsmittelgenerator (34) umfasst, der geeignet ist, Reduktionsmittel aus mindestens einem gasförmigen Edukt in der Abgasaufbereitungseinheit (1) zu erzeugen.

10. Abgasaufbereitungseinheit nach einem der Ansprüche 7 bis 9, bei der das Reduktionsmittel Ammoniak ist.

11. Abgasaufbereitungseinheit nach einem der Ansprüche 7 bis 10, bei der dem Reduktionskatalysator (4) ein Oxidationskatalysator (21) nachgeschaltet ist.

12. Abgasaufbereitungseinheit nach einem der Ansprüche 7 bis 11, bei der der Partikelfilter (3) und der Reduktionskatalysator (4) in einem Bauteil (17) ausgebildet sind.

13. Abgasaufbereitungseinheit nach einem der Ansprüche 7 bis 12, bei der der Partikelfilter (3) mindestens einen durchgängigen Strömungskanal (9) umfasst.

14. Abgasaufbereitungseinheit nach einem der Ansprüche 7 bis 13, bei der der Partikelfilter (3) mindestens eine metallische Lage (6, 7, 15) umfasst.

15. Abgasaufbereitungseinheit nach Anspruch 14, bei der der Partikelfilter (3) mindestens eine zumindest teilweise poröse metallische Lage (6) und mindestens eine zumindest teilweise als Blechlage ausgebildete Lage (7) umfasst.

16. Abgasaufbereitungseinheit nach Anspruch 14 oder 15, bei der der Partikelfilter (3) und/oder der Reduktionskatalysator (4) durch
- Wickeln mindestens einer zumindest teilweise strukturierten (7) und gegebenenfalls mindestens einer im Wesentlichen glatten Lage (6, 15) oder
- Stapeln mindestens einer zumindest teilweise strukturierten (7) und gegebenenfalls mindestens einer im wesentlichen glatten Lage (6, 15) und Verwinden mindestens eines Stapels
ausgebildet ist.

17. Abgasaufbereitungseinheit nach einem der Ansprüche 7 bis 16, bei der in Durchströmungsrichtung stromaufwärts des Partikelfilters (3) ein zweiter Oxidationskatalysator (35) zur Oxidation von Stickstoffmonoxid (NO) zu Stickstoffdioxid (NO₂) ausgebildet ist.

## Claims

1. Method for reducing a particle and nitrogen oxide proportion in an exhaust gas flow of an internal combustion engine, in which
1.1) a reducing agent is provided in the exhaust gas flow (11),
1.2) the exhaust gas flow (11) containing the reducing agent is particle filtered and then
1.3) a selective catalytic reduction of at least a part of the nitrogen oxides in the exhaust gas flow (11) is carried out, wherein
the reducing agent is generated at least partially on board from at least one gaseous starting material, wherein the starting material comprises at least exhaust gas from the internal combustion engine and wherein a plasma generator is used for generating the reducing agent and wherein the reducing agent is ammonia.

2. Method according to claim 1, in which particle filtering 1.2) is carried out in a particle filter (3).

3. Method according to any of the preceding claims, wherein the reducing agent includes a nitrogen containing and hydrogen containing compound.

4. Method according to claim 1, wherein as the starting material at least one of the following gases is used:
6.1) oxygen;
6.2) nitrogen;
6.3) air; and
6.4) exhaust gas.

5. Method according to any of the preceding claims, wherein the reducing agent is generated on-board at least partially from a reducing agent precursor.

6. Method according to claim 5, in which urea is used as reducing agent precursor.

7. Exhaust gas treatment unit (1) having a throughflow direction (5), comprising
9.1) a reducing agent adding apparatus (2) for adding reducing agent comprising ammonia;
9.2) a particle filter (3); and
9.3) a reduction catalytic converter (4) for selective catalytic reduction of nitrogen oxides (NOx),
wherein the reducing agent adding apparatus (2) is able to add a reducing agent for reducing nitrogen oxides (NOx) to an exhaust gas flow which flows through the exhaust gas treatment unit (1), **characterized in that** the components are interconnected in a way so that an exhaust gas flow can flow through the components 9.1), 9.2) and 9.3) in succession in the throughflow direction (5), wherein the reducing agent adding apparatus comprises a plasma generator and can generate reducing agent from at least one gaseous starting material, wherein the starting material comprises at least exhaust gas of the internal combustion engine.

8. Exhaust gas treatment unit (1) according to claim 7, wherein the reducing agent adding apparatus (2) includes an introduction device (23) for a reducing agent precursor and a unit for at least one of pyrolysis, thermolysis or hydrolysis.

9. Exhaust gas treatment unit (1) according to claim 7 or 8, wherein the reducing agent adding apparatus includes a reducing agent generator for generating reducing agent from at least one gaseous starting material in the exhaust gas treatment unit (1).

10. Exhaust gas treatment unit (1) according to one of claims 7 to 9, the reducing agent is ammonia.

11. Exhaust gas treatment unit (1) according to one of claims 7 to 10, wherein an oxidation catalytic converter (21) is arranged downstream of the reduction catalytic converter (4).

12. Exhaust gas treatment unit (1) according to one of claims 7 to 11, wherein the particle filter (3) and the reduction catalytic converter (4) are formed in one component (17).

13. Exhaust gas treatment unit (1) according to one of claims 7 to 12, wherein the particle filter (3) includes at least one continuous flow channel.

14. Exhaust gas treatment unit (1) according to one of claims 7 to 13, wherein the particle filter (3) includes at least one metallic layer (6, 7, 15).

15. Exhaust gas treatment unit (1) according to one of claims 7 to 14, wherein the particle filter (3) includes at least one at least partially porous metallic layer (6) and at least one layer (7) constructed at least partially as a sheet metal layer.

16. Exhaust gas treatment unit (1) according to claim 14 or 15, wherein the particle filter (3) and/ or the reduction catalytic converter (4) are formed by
- winding up at least one at least partially structured (7) and possibly at least one substantially smooth layer (6, 15) or
- stacking at least one at least partially structured (7) and possibly at least one substantially smooth layer (6, 15) and winding at least one stack.

17. Exhaust gas treatment unit (1) according to one of claims 7 to 16, wherein a second oxidation catalytic converter (35) is arranged up-stream of the particle filter (3) in the throughflow direction for oxidation of nitrogen monoxide (NO) to nitrogen dioxide (NO₂).

## Revendications

1. Procédé pour réduire la proportion de particules et d'oxydes d'azote dans un flux de gaz d'échappement d'un moteur à combustion interne, dans lequel
1.1)un agent réducteur est introduit dans le flux de gaz d'échappement (11),
1.2)le flux de gaz d'échappement (11) comprenant l'agent réducteur est soumis à une filtration de particules et ensuite
1.3)une réduction catalytique sélective d'au moins une partie des oxydes d'azote dans le flux de gaz d'échappement (11) a lieu,
l'agent réducteur étant produit au moins en partie sur place à partir d'au moins un éduit gazeux, l'éduit comprenant au moins des gaz d'échappement du moteur à combustion interne et un générateur de plasma étant utilisé pour produire l'agent réducteur, et l'agent réducteur comprenant de l'ammoniac.

2. Procédé selon la revendication 1, dans lequel la filtration de particules 1.2) est effectuée dans un filtre à particules (3).

3. Procédé selon l'une quelconque des revendications précédentes, dans lequel l'agent réducteur comprend un composé contenant de l'azote et de l'hydrogène.

4. Procédé selon la revendication 1, dans lequel on utilise comme éduit au moins l'un des gaz suivants :
6.1)oxygène ;
6.2)azote ;
6.3) air ; et
6.4)gaz d'échappement.

5. Procédé selon l'une quelconque des revendications précédentes, dans lequel l'agent réducteur est produit sur place au moins en partie à partir d'un précurseur d'agent réducteur.

6. Procédé selon la revendication 5, dans lequel on utilise de l'urée en tant que précurseur d'agent réducteur.

7. Unité de traitement de gaz d'échappement (1), qui présente un sens d'écoulement (5), comprenant
9.1)un ajout d'agent réducteur (2) pour ajouter un agent réducteur contenant de l'ammoniac ;
9.2)un filtre à particules (3) ; et
9.3)un catalyseur de réduction (4) pour la réduction catalytique sélective d'oxydes d'azote (NOx),
l'ajout d'agent réducteur (2) étant adapté pour ajouter à un flux de gaz traversant l'unité de traitement de gaz d'échappement (1) un agent réducteur en vue de réduire les oxydes d'azote (NOx),
**caractérisée en ce que** les composants sont réunis les uns aux autres de telle sorte qu'un flux de gaz puisse traverser successivement les composants 9.1), 9.2) et 9.3) dans le sens d'écoulement (5), l'ajout d'agent réducteur présentant un générateur de plasma et étant prévu pour produire un agent réducteur à partir d'au moins un éduit gazeux, l'éduit contenant au moins des gaz d'échappement du moteur à combustion interne.

8. Unité de traitement de gaz d'échappement (1) selon la revendication 7, dans laquelle l'ajout d'agent réducteur (2) comprend un dispositif d'introduction (23) pour un précurseur d'agent réducteur et une unité de pyrolyse, de thermolyse et/ou d'hydrolyse (22).

9. Unité de traitement de gaz d'échappement selon la revendication 7 ou 8, dans laquelle l'ajout d'agent réducteur (2) comprend un générateur d'agent réducteur (34), qui est approprié pour produire l'agent réducteur à partir d'au moins un éduit gazeux dans l'unité de traitement de gaz d'échappement (1).

10. Unité de traitement de gaz d'échappement selon l'une quelconque des revendications 7 à 9, dans laquelle l'agent réducteur est de l'ammoniac.

11. Unité de traitement de gaz d'échappement selon l'une quelconque des revendications 7 à 10, dans laquelle le catalyseur de réduction (4) est suivi d'un catalyseur d'oxydation (21).

12. Unité de traitement de gaz d'échappement selon l'une quelconque des revendications 7 à 11, dans laquelle le filtre à particules (3) et le catalyseur de réduction (4) sont réalisés en un composant (17).

13. Unité de traitement de gaz d'échappement selon l'une quelconque des revendications 7 à 12, dans laquelle le filtre à particules (3) comprend au moins un canal d'écoulement continu (9).

14. Unité de traitement de gaz d'échappement selon l'une quelconque des revendications 7 à 13, dans laquelle le filtre à particules (3) comprend au moins une couche métallique (6, 7, 15).

15. Unité de traitement de gaz d'échappement selon la revendication 14, dans laquelle le filtre à particules (3) comprend au moins une couche métallique au moins partiellement poreuse (6) et au moins une couche (7) réalisée au moins en partie sous forme de couche de tôle.

16. Unité de traitement de gaz d'échappement selon la revendication 14 ou 15, dans laquelle le filtre à particules (3) et/ou le catalyseur de réduction (4) sont réalisés par
- enroulement d'au moins une couche au moins partiellement structurée (7) et éventuellement d'au moins une couche essentiellement lisse (6, 15) ou
- empilement d'au moins une couche au moins partiellement structurée (7) et éventuellement d'au moins une couche essentiellement lisse (6, 15) et gauchissement d'au moins une pile.

17. Unité de traitement de gaz d'échappement selon l'une quelconque des revendications 7 à 16, dans laquelle un deuxième catalyseur d'oxydation (35) est réalisé dans le sens d'écoulement en amont du filtre à particules (3) pour oxyder le monoxyde d'azote (NO) pour former du dioxyde d'azote (NO₂).
